# EUROPEAN PATENT SPECIFICATION

(11) **EP 2 337 890 B1**
(45) Date of publication and mention of the grant of the patent: **14.08.2013**
(21) Application number: 08797931.6
(22) Date of filing: 15.08.2008
(51) Int. Cl.: D07B 1/16, C08J 5/10

(54) **Use of a friction stabilizer in a polymer jacket material of a cord and corresponding method of making a cord assembly comprising a jacket**
Verwendung eines Reibungsstablisators in einem polymeren Mantel eines Seils und entsprechendes Verfahren zur Herstellung eines Seilverbunds mit einem Mantel
Utilisation d'un stabilisateur de frottemment dans une gaine en polymère d'une corde et procédé correspondant

(43) Date of publication of application: 29.06.2011
(73) Proprietor: Otis Elevator Company, Farmington, CT 06032-2568 (US)
(72) Inventor: YU, Xiaomei, Glastonbury Connecticut 06033 (US); KRISHNAN, Gopal, R., Wethersfield Connecticut 06109 (US); WESSON, John, P., Vernon CT 06066 (US); MILTON-BENOIT, John, M., West Suffield Connecticut 06093 (US)
(74) Representative: Klunker . Schmitt-Nilson . Hirsch
(86) International application number: PCT/US2008/073231
(87) International publication number: WO 2010/019149

(56) References cited:
- EP-A1- 1 927 608
- WO-A-2007/050069
- DE-U1- 29 924 773
- JP-A- 6 146 010
- JP-A- 11 247 078
- JP-A- 2004 131 897
- US-A- 3 137 990
- US-A1- 2003 024 770
- US-A1- 2006 182 967
- ANONYMOUS: 'Melamine derivatives', [Online] 22 October 2007, Internet Article Retrieved from the Internet: <URL:http://web.archive.org/web/20071022175 659/http://specialchem4polymers.com/tc/Mela mine-Flame-Retardants/index.aspx?id=4004> [retrieved on 2012-01-31]

## Description

### BACKGROUND

There are various uses for elongated flexible assemblies such as for elevator load bearing members or roping arrangements, drive belts for machines such as a passenger conveyor and handrails for passenger conveyors, for example. Such assemblies may be designed with a plurality of cords covered by a polyurethane jacket. For example, U.S. Patent Nos. 6,295,799 and 6,739,433 show belts for use in suspending an elevator car and counterweight within an elevator system. An example passenger conveyor handrail construction is shown in U.S. Patent No. 4,982,829. An example passenger conveyor drive belt is shown in U.S. Patent No. 6,540,060.

One aspect of such assemblies is that they interact with other system components. The coefficient of friction between the jacket and the other system components typically is chosen to achieve satisfactory performance. For example, some friction is desired to achieve sufficient traction between elevator load bearing members and a traction sheave for controlling movement of the elevator car. The surface roughness on the sheave, the jacket or both is one factor that influences the coefficient of friction between them. Another factor is the chemical composition of the jacket material.

Handrails for passenger conveyors have other friction characteristic requirements. One side of the handrail slides along a guidance. That movement of the handrail preferably occurs with limited or no friction between the handrail and the guidance. The other side of the handrail provides a gripping surface for passengers riding on the conveyor. The gripping surface requires different friction characteristics. The gripping surface is often engaged by rollers used for driving the handrail. It is necessary in such arrangements to maintain a sufficient amount of friction between the handrail and the drive arrangement to achieve the desired movement.

Over time, the coefficient of friction between such components tends to change. The surface roughness, surface chemistry or both can change, for example. Surface contaminants may accumulate that need to be removed. Cleaning solvents or lubricants may be used during maintenance procedures. Any of these factors can alter the surface roughness, chemistry or both, which further increases the variability in friction characteristics of the components. Additional efforts are required to try to maintain desired friction characteristics. Even when known attempts are made, the results are not consistent or precise enough. Maintaining consistent friction properties is desirable for maintaining a desired level of performance, for example.

WO 2007/050069 discloses a load bearing assembly comprising an elongated tension member and a polymer jacket at least partially surrounding the tension member, wherein the polymer jacket may contain a friction-modifying component such as a wax or oil or a thermoplastic fluoropolymer having a molecular weight greater than 800.

### Summary

Subject matter of the present invention is the use of at least one of melamine cyanurate, melamine-phosphate, and hydrocarbon phosphate as a friction stabilizer, as claimed in claim 1.

Subject matter of the present invention is also a method of making an assembly having at least one elongated cord tension member at least partially covered by a polymer jacket, as claimed in claim 9.

Embodiments of the invention are claimed in the dependent claims.

An exemplary assembly includes at least one elongated tension member. A jacket covers at least some of the tension member. The jacket comprises a polymer material including a friction stabilizer that facilitates maintaining a desired friction characteristic of at least an exterior surface on the jacket.

An exemplary method of making an assembly having at least one elongated tension member at least partially covered by a jacket includes mixing a friction stabilizer with a polymer base resin to provide a master batch of mixed material. The mixed material is then compounded with a base polymer material to yield a jacket material. The jacket material is then molded onto at least a portion of the tension member to form a desired shape of the jacket.

The various features and advantages of the disclosed examples will become apparent to those skilled in the art from the following detailed description. The drawings that accompany the detailed description can be briefly described as follows.

### BRIEF DESCRIPTION OF THE DRAWINGS

Figure 1 schematically illustrates selected portions of an elevator system including a load bearing member wherein an embodiment of this invention is applicable.

Figure 2 is an end view schematically showing one example elevator load bearing member assembly.

Figure 3 is an end view schematically illustrating another example elevator load bearing assembly.

Figure 4 diagrammatically illustrates a passenger conveyor including a drive belt and a handrail wherein an embodiment of this invention is applicable.

Figure 5 schematically shows an example drive belt configuration.

Figure 6 schematically shows an example handrail configuration.

Figure 7 schematically illustrates an example method according to an embodiment of this invention of making an assembly.

### DETAILED DESCRIPTION

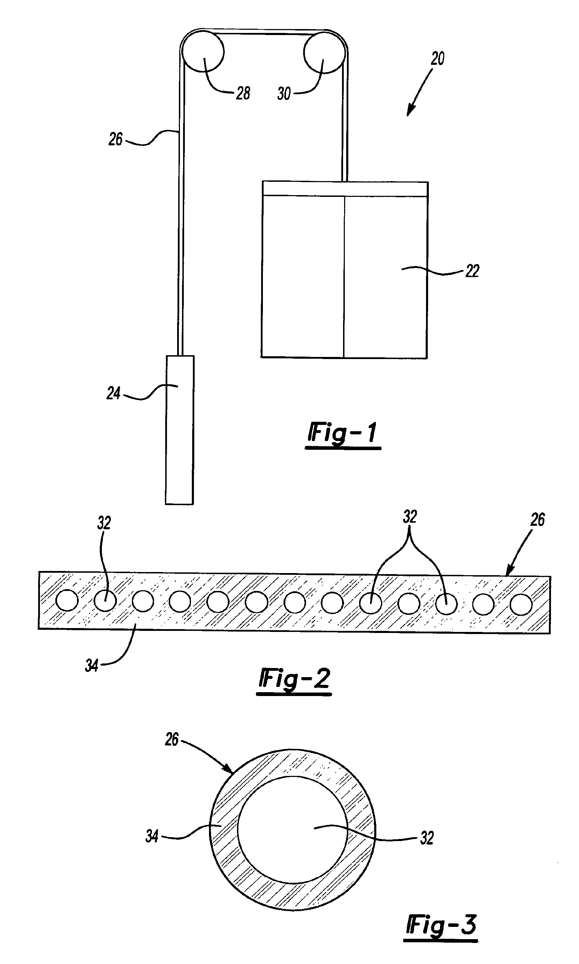

Figure 1 schematically shows selected portions of an example elevator system 20. An elevator car 22 and counterweight 24 are suspended by a load bearing assembly 26. In one example, the load bearing assembly 26 comprises a plurality of flat belts. In another example, the load bearing assembly 26 comprises a plurality of round ropes.

The load bearing assembly 26 supports the weight of the elevator car 22 and the counterweight 24 and facilitates movement of the elevator car 22 into desired positions by moving along sheaves 28 and 30. One of the sheaves will be a traction sheave that is moved by an elevator machine in a known manner to cause the desired movement and placement of the elevator car 22. In some instances, such as with flat belts, the traction sheave could comprise the shaft of the machine (i.e. not a separate component mounted to the shaft). The other sheave in this example is an idler sheave.

Figure 2 is an end view schematically showing one example flat belt configuration of the example load bearing assembly 26. In this example, the flat belt includes a plurality of elongated cord tension members 32 and a polymer jacket 34 that contacts the tension members 32. In this example, the jacket 34 encases the tension members 32. In one example, the tension members 32 comprises wound metallic cords, such as steel. The polymer jacket 34 in one example comprises a thermoplastic elastomer. In one example, the jacket 34 comprises a thermoplastic polyurethane.

Another example is schematically shown in Figure 3. An end view of a rope used as part of the load bearing assembly 26 includes at least one tension member 32 and a polymer jacket 34. In the example of Figure 3, the same materials can be used as those mentioned above.

The load on the example belt is carried by the tension members 32. The interaction between the jacket 34 and the sheaves 28, 30 requires a desired amount of friction to achieve sufficient traction, for example. Maintaining the desired coefficient of friction ensures consistent system performance. In each of the examples of Figures 2 and 3 the polymer material for the jacket 34 includes a friction stabilizer that facilitates maintaining a desired friction characteristic of at least an exterior surface on the jacket 34.

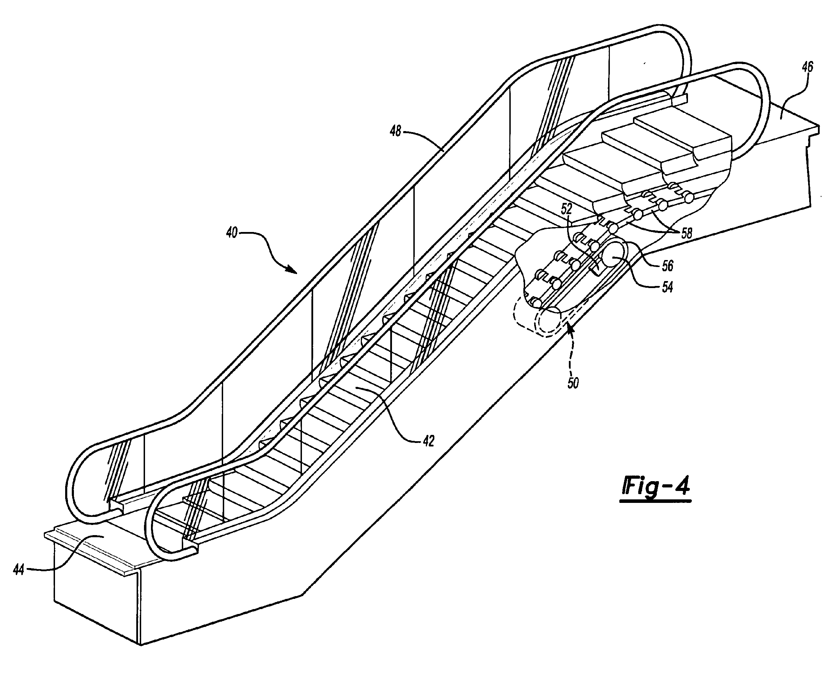

Figure 4 schematically illustrates an example passenger conveyor 40. In this example, a plurality of steps 42 move in a known manner to carry passengers between landings 44 and 46. A handrail 48 is provided for passengers to grab onto while traveling on the conveyor 40.

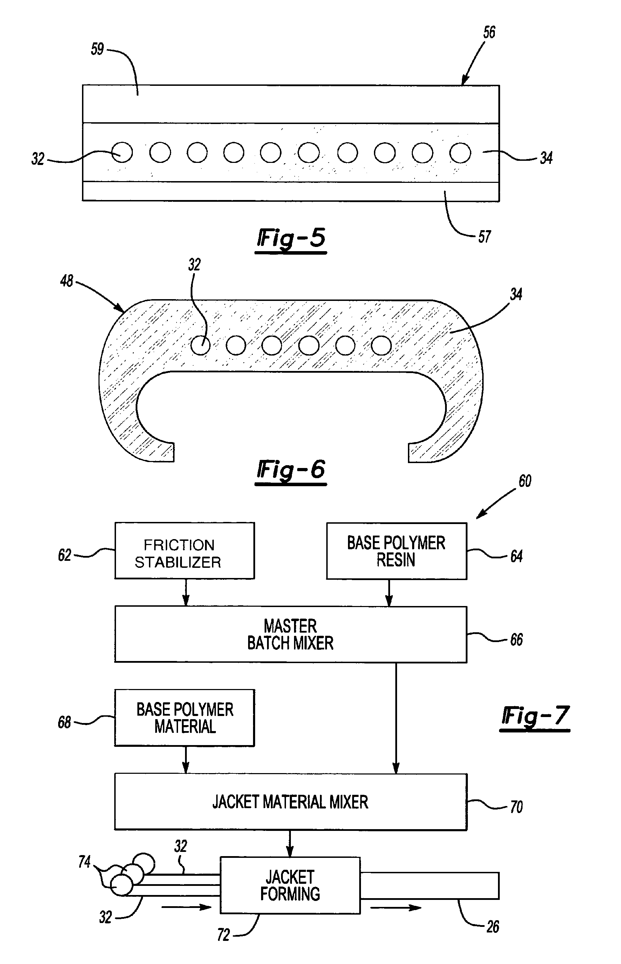

As shown in Figure 6, the handrail 48 includes a plurality of tension members 32 such as steel cords at least partially covered by a polymer jacket 34. The polymer jacket in this example establishes the gripping surface and the body of the handrail 48. The polymer jacket material includes at least one friction stabilizer that facilitates maintaining a desired friction characteristic of at least an exterior, gripping surface on the jacket 34.

The example of Figure 4 includes a drive arrangement 50 for propelling the steps 42 in a desired direction. A motor 52 rotates a drive sheave 54 to cause movement of a drive belt 56. As shown in Figure 5, the example drive belt 56 has a plurality of elongated cord tension members 32 covered by a jacket 34. The jacket material establishes teeth 57 that interact with a corresponding surface on the drive sheave 54. A step chain 58 (Figure 4) is engaged by teeth 59 on the drive belt 56 to cause the desired movement of the steps 42.

Desired amounts of friction are useful to ensure a desired interaction between the drive belt 56 on the one hand and the drive sheave 54 or the step chain 58 on the other hand. In this example, the drive belt 56 includes a polymer jacket material with at least one friction stabilizer that facilitates maintaining a desired friction characteristic of at least an exterior surface on the jacket 34.

When a metal is used for the any of the example tension members 32, the metal material may be uncoated, coated, or plated with a protective metal. For example, a base ferrous metal may be coated or plated with zinc, tin or copper.

Figure 7 schematically illustrates an example method at 60 of making an assembly such as an elevator load bearing member, a passenger conveyor handrail or a drive belt such as that used for a passenger conveyor. A friction stabilizer 62 is mixed with a supply of base polymer resin 64 in a master batch mixer 66.

The friction stabilizer 62 is one of melamine-based, phosphate-based or both namely at least one of melamine cyanurate, melamine-phosphate, and hydrocarbon phosphate, for example the non-halogen containing melamine salts.
Melamine cyanurate and melamine-phosphate are useful with a thermoplastic polyurethane jacket material.

Other friction stabilizers include organic phosphates, namely hydrocarbon phosphate, which is useful with jacket materials that comprise elastomeric alloys such as melt-processible rubbers.

The amount of friction stabilizer can be varied to achieve target friction characteristics. In one example, the amount of friction stabilizer mixed with the base polymer resin in the master batch mixer 66 is between 20% and 50% by weight. The resulting master batch of mixed material in this example is then compounded with a base polymer material 68 in a jacket material mixer 70. The resulting jacket material after the mixing at 70 may contain up to 20% by weight of the friction stabilizer. One example includes from 0.2% to 20% by weight of the friction stabilizer in the jacket material. In one example, the resulting polymer material in the jacket material mixer 70 comprises between about 0.2% and about 10% by weight of the friction stabilizer.

Referring to Figure 7, the jacket material in this example is formed in a jacket forming station 72 such as a molding device to provide the desired geometry of the jacket. In the illustrated example, a plurality of spools 74 supply tension members 32 to the jacket forming station 72 where the jacket is molded onto at least one exterior surface of the tension members 32 resulting in the desired assembly. In the case of Figure 5, the resulting assembly is an elevator load bearing member 26.

Providing a melamine-based or phosphate-based friction stabilizer in an amount up to 20% by weight of the jacket polymer material increases the longevity of the friction characteristic of the jacket material. The friction stabilizer minimizes or prevents changes in the friction characteristic over time.

The presence of the friction stabilizer in at least one embodiment does not interfere with or adversely change other properties of the jacket material such as the flexibility of the base polymer material so that the jacket functions as desired for its particular application (e.g., is able to follow a guidance when the assembly comprises a passenger conveyor handrail, is able to transmit a sufficient drive force when the assembly comprises a drive member such as a belt or is able to wrap around sheaves and achieve sufficient traction for moving an elevator car when the assembly comprises an elevator load bearing member). Additionally, the ability to mold the jacket into a desired shape and to maintain good adhesion between the jacket 34 and the tension members 32 is not compromised. In fact, adhesion between the material of the jacket 34 and the tension members 32 is improved by the presence of the friction stabilizer in the jacket material.

The provides unexpectedly increased stability of friction characteristics of the jacket compared to a polymer jacket material with out one of them. In some examples, the adhesion strength is at least twice that which could be attained without the example friction stabilizers.

With the use of at least one of melamine cyanurate, melamine phosphate, and hydrocarbon phosphate as a friction stabilizer, the jacket of an assembly also has good thermal stability, hydrolytic stability, low hydrophilic characteristics and good compatibility to interact with other components such as an elevator sheave or a passenger conveyor step chain. The use of the disclosed friction stabilizers also provides flame-retardant properties to the jacket material.

The preceding description is exemplary rather than limiting in nature. Variations and modifications to the disclosed examples may become apparent to those skilled in the art that do not necessarily depart from the essence of this invention. The scope of legal protection given to this invention can only be determined by studying the following claims.

## Claims

1. Use of at least one of melamine cyanurate, melamine-phosphate, and hydrocarbon phosphate as a friction stabilizer (62) in an assembly (26, 48, 56) comprising:
at least one elongated tension member (32), and
a jacket (34) covering at least some of the at least one tension member, the jacket comprising a polymer material (68) and the friction stabilizer, the friction stabilizer facilitating maintaining a desired friction characteristic of at least an exterior surface on the jacket (34).

2. The use of claim 1, wherein the assembly comprises a plurality of elongated cord tension members (32) at least partially covered by the jacket (34).

3. The use of claim 1 or 2, wherein the assembly comprises an elevator load bearing member (26).

4. The use of claim 3, wherein the elevator load bearing member (26) comprises a flat belt.

5. The use of claim 1, wherein the assembly comprises one of a passenger conveyor drive member (56) and a passenger conveyor handrail (48).

6. The use of claim 5, wherein the drive member (56) comprises a drive belt.

7. The use of any one of claims 1 to 6, wherein the polymer material comprises up to 20% by weight of the friction stabilizer (62).

8. The use of claim 7, wherein the polymer material comprises between about 0.2% and about 10% by weight of the friction stabilizer (62).

9. A method of making an assembly (26, 48, 56) having at least one elongated cord tension member (32) at least partially covered by a polymer jacket (34), comprising the steps of:
providing a polymer material (68);
providing a friction stabilizer (62); and
placing the polymer material (68) and the friction stabilizer (62) onto the at least one elongated cord tension member (32) to form a desired shape of the jacket (34), **characterized in that** the friction stabilizer (62) comprises at least one of melamine cyanurate, melamine phosphate and hydrocarbon phosphate.

10. The method of claim 9, comprising:
mixing a polymer base resin (64) and said friction stabilizer (62) to provide a batch of mixed material; and
compounding said batch of mixed material with the polymer material (68) to provide a batch of jacket material;
wherein said placing step uses said batch of jacket material.

11. The method of claim 9 or 10, wherein the amount of friction stabilizer (62) in the jacket material is between about 0.2% and about 10% by weight.

## Patentansprüche

1. Verwendung mindestens einer der Substanzen Melamin-cyanurat, Melamin-phosphat und Kohlenwasserstoff-phosphat als ein Reibungsstabilisierungsmittel (62) in einer Baueinheit (26, 48, 56), aufweisend:
mindestens ein längliches Zugspannungselement (32), und
eine Hülle (34), die mindestens etwas von dem mindestens einen Zugspannungselement bedeckt, wobei die Hülle ein Polymermaterial (68) und das Reibungsstabilisierungsmittel aufweist, wobei das Reibungsstabilisierungsmittel das Aufrechterhalten einer gewünschten Reibungseigenschaft mindestens einer Außenoberfläche der Hülle (34) erleichtert.

2. Verwendung nach Anspruch 1, bei der die Baueinheit eine Mehrzahl von länglichen Seil-Zugspannungselementen (32) aufweist, die mindestens zum Teil von der Hülle (34) bedeckt werden.

3. Verwendung nach Anspruch 1 oder 2, bei der die Baueinheit ein tragendes Aufzugselement (26) aufweist.

4. Verwendung nach Anspruch 3, bei der das tragende Aufzugselement (26) ein flaches Band aufweist.

5. Verwendung nach Anspruch 1, bei der die Baueinheit ein Personen-Beförderungseinrichtungs-Treibelement (56) und/oder einen Personen-Beförderungseinrichtungs-Handlauf (48) aufweist.

6. Verwendung nach Anspruch 5, bei der das Treibelement (56) einen Treibriemen aufweist.

7. Verwendung nach einem der Ansprüche 1 bis 6, bei der das Polymermaterial bis zu 20 Gewichts-% des Reibungsstabilisierungsmittels (62) aufweist.

8. Verwendung nach Anspruch 7, bei der das Polymermaterial zwischen etwa 0,2 Gewichts-% und etwa 10 Gewichts-% des Reibungsstabilisierungsmittels (62) aufweist.

9. Verfahren zur Herstellung einer Baueinheit (26, 48, 56) mit mindestens einem länglichen Seil-Zugspannungselement (32), das zumindest zum Teil von einer Polymerhülle (34) bedeckt ist, folgende Schritte aufweisend:
Bereitstellen eines Polymermaterials (68);
Bereitstellen eines Reibungsstabilisierungsmittels (62); und
Anbringen des Polymermaterials (68) und des Reibungsstabilisierungsmittels (62) an dem mindestens einen länglichen Seil-Zugspannungselement (32), um eine gewünschte Form der Hülle (34) auszubilden, **dadurch gekennzeichnet, dass** das Reibungsstabilisierungsmittel (62) mindestens eine der Substanzen Melamin-cyanurat, Melamin-phosphat und Kohlenwasserstoff-phosphat aufweist.

10. Verfahren nach Anspruch 9, aufweisend:
Mischen eines Polymer-Basisharzes (64) und des Reibungsstabilisierungsmittels (62), um eine Charge von gemischtem Material bereitzustellen; und
Vereinigen der Charge von gemischtem Material mit dem Polymermaterial (68), um eine Charge von Hüllenmaterial bereitzustellen;
wobei der Schritt des Anbringens die Hüllenmaterial-Charge verwendet.

11. Verfahren nach Anspruch 9 oder 10, bei dem die Menge an Reibungsstabilisierungsmittel (62) in dem Hüllenmaterial zwischen etwa 0,2 Gewichts-% und etwa 10 Gewichts-% beträgt.

## Revendications

1. Utilisation d'au moins un cyanurate de mélamine, phosphate de mélamine ou phosphate d'hydrocarbure en tant que stabilisateur de frottement (62) dans un assemblage (26, 48, 56) comprenant :
au moins un élément de tension allongé (32), et
une gaine (34) recouvrant au moins une partie du au moins un élément de tension, la gaine comprenant un matériau polymère (68) et le stabilisateur de frottement, le stabilisateur de frottement facilitant la conservation d'une caractéristique de frottement souhaitée d'au moins une surface extérieure sur la gaine (34).

2. Utilisation selon la revendication 1, dans laquelle l'assemblage comprend une pluralité d'éléments de tension de corde allongés (32) au moins partiellement recouvert par la gaine (34).

3. Utilisation selon la revendication 1 ou 2, dans laquelle l'assemblage comprend un élément de support de charge d'ascenseur (26).

4. Utilisation selon la revendication 3, dans laquelle l'élément de support de charge d'ascenseur (26) comprend une courroie plate.

5. Utilisation selon la revendication 1, dans laquelle l'assemblage comprend l'un parmi un élément de commande de tapis roulant (56), ou une main courante de tapis roulant (48).

6. Utilisation selon la revendication 5, dans laquelle l'élément de commende (56) comprend une courroie d'entraînement.

7. Utilisation selon l'une quelconque des revendications 1 à 6, dans laquelle le matériau polymère comprend jusqu'à 20 % en poids du stabilisateur de frottement (62).

8. Utilisation selon la revendication 7, dans laquelle le matériau polymère comprend entre environ 0,2 % et environ 10 % en poids du stabilisateur de frottement (62).

9. Procédé de fabrication d'un assemblage (26, 48, 56) comprenant au moins un élément de tension de corde allongé (32) au moins partiellement recouvert d'une gaine en polymère (34), comprenant les étapes de :
fourniture d'un matériau polymère (68) ;
fourniture d'un stabilisateur de frottement (62) ; et
la mise en place du matériau polymère (68) et du stabilisateur de frottement (62) sur l'au moins un élément de tension de corde allongé (32) pour former une forme souhaitée de la gaine (34), **caractérisée en ce que** le stabilisateur de frottement (62) comprend au moins un cyanurate de mélamine, phosphate de mélamine ou phosphate d'hydrocarbure.

10. Procédé selon la revendication 9, comprenant :
le mélange d'une résine de polymère de base (64) et dudit stabilisateur de frottement (62) pour fournir une charge de matériau mixte ; et
le mélange de ladite charge de matériau mixte avec le matériau polymère (68) pour fournir une charge de matériau gainant ;
dans lequel ladite étape de mise en place utilise ladite charge de matériau gainant.

11. Procédé selon la revendication 9 ou 10, dans lequel la quantité de stabilisateur de frottement (62) dans le matériau gainant est comprise entre environ 0,2 % et environ 10 % en poids.
